Europäisches Patentamt

European Patent Office

Office européen des brevets

(19)

(11) Publication number: **0 219 263 B1**

(12) # EUROPEAN PATENT SPECIFICATION

(45) Date of publication of patent specification: **06.11.91**

(51) Int. Cl.⁵: **H04N 5/14**, H04N 5/18, H04N 3/24

(21) Application number: **86307512.3**

(22) Date of filing: **01.10.86**

(54) **Video signal blanking interval signal conditioning circuit.**

(30) Priority: **01.10.85 GB 8524200**
**29.04.86 US 857047**

(43) Date of publication of application:
**22.04.87 Bulletin 87/17**

(45) Publication of the grant of the patent:
**06.11.91 Bulletin 91/45**

(84) Designated Contracting States:
**BE DE FR GB IT**

(56) References cited:
**DE-A- 3 032 710**
**GB-A- 2 137 850**

**FUNKSCHAU; No. 4, 1982, Munich, WERNER STROSSENREUTHER, "Nf-Störspannung wirksam unterdrückt", pages 70-72**

(73) Proprietor: **RCA LICENSING CORPORATION**
**2 Independence Way**
**Princeton New Jersey 08540(US)**

(72) Inventor: **Hinn, Werner**
**Rietholzstrasse 38**
**CH-8125 Zollikerberg(CH)**

(74) Representative: **Smith, Thomas Ian Macdonald et al**
**RCA International Limited Burdett House**
**15-16 Buckingham Street**
**London WC2N 6DU(GB)**

Description

This invention concerns a circuit, such as a blanking and clamping circuit, for conditioning the blanking intervals of a video signal in a wide bandwidth video signal processing and display system such as a video monitor.

The video signal processed by a video monitor is often clamped before being applied to a video output display driver stage. Clamping is employed to eliminate horizontal and vertical synchronizing (sync) pulses, and to insert a defined reference level during image blanking intervals. Clamping also assists to establish a well-defined DC operating point for the display driver stage. This avoids unwanted changes in driver stage transfer characteristics related to linearity and phase response, for example.

Wideband display driver stages preferably operate with a substantially fixed DC operating point so that the driver stage is not required to accommodate large output DC level shifts. Large output DC level shifts result in increased power consumption and dissipation for a wideband driver stage which is often already operating at increased DC current levels. Operating point variations also influence the capacitance parameters of display driver transistors, undesirably causing operating bandwidth variations with shifts in transistor DC bias.

In wideband video signal processing channels, special care must be taken to prevent the bandwidth of the video channel from being impaired by blanking interval signal conditioning circuits such as blanking and clamping circuits. It is therefore desirable to construct such signal conditioning circuits with few components so as to reduce the bandwidth impairing loading of the video signal path by parasitic capacitances associated with the signal conditioning circuit. A video signal blanking interval signal conditioning circuit in accordance with the principles of the present invention as set out in claim 1 accomplishes this result.

In a disclosed preferred embodiment of a blanking interval signal conditioning circuit according to the present invention, a first electronic switch couples a video signal from an input buffer amplifier to an input electrode of an AC coupling capacitor. A second electronic switch is coupled to an output electrode of the capacitor, which is coupled to an output buffer. The first and second switches are of the single pole, single throw type, the first switch being placed in series with the input of the coupling capacitor, and the second switch being placed in shunt with the output electrode of the coupling capacitor. The first switch is normally keyed to conduct during image trace intervals and during a reference portion, e.g., a portion of the back-porch interval, of image retrace blanking intervals, and is nonconductive at other times. The second switch is normally keyed to conduct only for the duration of each image retrace blanking interval.

In the drawing:

FIGURE 1 illustrates a portion of a wideband video monitor including a video signal conditioning circuit in accordance with the principles of the present invention;

FIGURE 2 shows signal waveforms helpful in understanding the operation of the signal conditioning circuit of FIGURE 1; and

FIGURE 3 depicts additional details of the signal conditioning circuit of FIGURE 1.

In FIGURE l, a source 10 of wideband (e.g., 100 MHz) color video signals provides output color signal r (red), g (green) and b (blue). Source 10 may, for example, be associated with a computer data display terminal. The r, g and b signals from source 10 are respectively coupled to similar color video signal channels respectively including video signal processors 12a, 12b and 12c, a blanking and clamping signal conditioning circuit 14a, 14b and 14c in accordance with the present invention, and an output display driver and key ed clamp network 20a, 20b and 20c.

High level video output color signals R, G and B from the driver/clamp networks are applied to intensity control cathode electrodes 28c, 28b and 28a respectively of a color image displaying kinescope 30. Since the color signal processing channels are similar, only the red color signal channel which receives red color signal r from source 10 will be described in detail.

The r color signal is applied to video processor 12a which includes signal amplifying, level shifting and gain control stages, for example. The video signal from processor 12a is coupled via an input buffer amplifier 15 to blanking and clamping signal conditioning circuit 14a as will be discussed subsequently. A conditioned video output signal from circuit 14a is coupled via an output buffer amplifier 19 to a video output display driver stage 21. A high level color signal R from driver stage 21, after AC coupling via a clamping capacitor 24, is applied to kinescope cathode 28c.

Capacitor 24 acts in conjunction with a keyed clamping DC restoration network 25, e.g., including a keyed diode, for establishing the brightness of a displayed image in accordance with the setting of a viewer adjustable brightness control potentiometer 26 with a wiper coupled to a bias input of network 25. Clamp 25 is keyed to operate during a portion of each horizontal image blanking interval in response to a periodic keying pulse $V_k$. Keying signal $V_k$, together with switching signals S1 and S2 associated with the operation of signal conditioning circuit 14a, are provided from a source of timing signals 35 in response to horizontal (H) and vertical (V) image synchronizing signals derived from deflection circuits of the system (not shown).

Circuit 14a includes a first electronic switch 16 of the single pole, single throw type, connected between an output of buffer 15 and an input terminal of coupling capacitor 17. Buffer amplifier 15 provides an output voltage at a low impedance for charging capacitor 17 when switches 16 and 18 are conductive. Circuit 14a also includes a second electronic switch 18, also of the single pole, single throw type, shunting the video signal path between an output terminal of capacitor 17 and an input of buffer amplifier 19. Buffer amplifier 19 exhibits a high input impedance to prevent excessive discharge of capacitor 17, and a low output impedance to facilitate coupling of the video signal from circuit 14a to succeeding circuits. Switches 16 and 18 respectively respond to timing signals S1 and S2, and switch 18 receives an input reference voltage VR which is conveyed to the video signal path when switch 18 is rendered conductive, i.e., closed, as will be discussed.

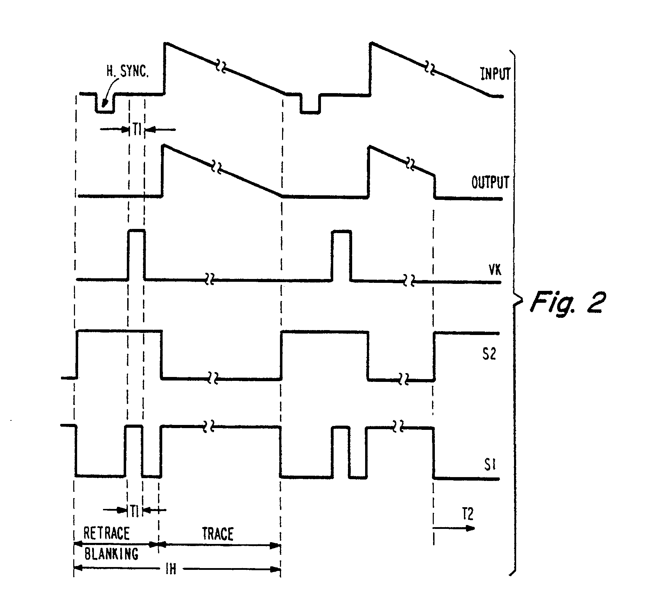

The operation of circuit 14a will be discussed with regard to FIGURE 2, which illustrates timing signals S1 and S2 associated with circuit 14a, keying signal VK associated with output clamp 25, an INPUT video signal waveform illustrative of the video signal applied to the input of buffer 15, and an OUTPUT video signal waveform illustrative of the video signal applied to the input of buffer 19.

The INPUT signal waveform illustratively includes two horizontal image lines, each (IH) including an image retrace blanking interval and an image trace interval when image information is to be displayed. The video signal blanking interval includes a horizontal synchronizing (H. SYNC) interval followed by a so-called "back porch" interval including a reference interval T1.

When signal blanking is required, switch 18 connects the input of buffer 19 to a desired blanking reference voltage as represented by reference voltage VR. Switches 16 and 18 are both closed (conductive) during clamping intervals, charging capacitor 17 such that the video signal at the input of buffer 19 exhibits the blanking reference level during back porch reference interval T1 of each horizontal blanking interval. In this circuit, reference voltage VR is both a clamping reference voltage and a blanking reference voltage.

Switch 16 is rendered conductive (i.e., closed) during each horizontal image trace interval when image information is to be displayed, and during reference interval T1 of the "back porch" interval of each horizontal blanking interval, in response to the positive pulse components of timing signal S1. Switch 16 is rendered nonconductive (i.e., open) during the remaining portion of each horizontal blanking interval.

Switch 18 is rendered conductive (i.e., closed) for the duration of each horizontal blanking interval in response to the positive pulse component of timing signal S2. Switch 18 is rendered nonconductive (i.e., open) during each horizontal image trace interval. In some systems switch 18 may be rendered conductive at other times, illustratively at a time T2, when it is desired to apply a given reference voltage to the video signal path. This may be required, for example, to establish a reference for use by an automatic kinescope bias (AKB) control system which automatically maintains a desired bias condition for the kinescope. AKB systems commonly require a video signal reference condition during prescribed intervals when the AKB system is operative. As seen from FIGURE 2, a video OUTPUT signal coupled by buffer amplifier 19 to display driver 21 exhibits a fixed blanking reference level, related to blanking reference voltage VR, during the horizontal blanking intervals and at other given times in accordance with the requirements of a given system as mentioned above.

Thus clamping occurs only during time interval T1 when the charge on capacitor 17 is to be changed, at which time switches 16 and 18 are both conductive. During the remainder of the blanking interval, switch 18 remains conductive to provide reference voltage VR to amplifier 19, and switch 16 is nonconductive to prevent any further change in the charge on capacitor 17.

The fixed reference level to which the video signal is clamped during blanking intervals establishes a desired DC level of the video signal, which assists to establish a well-defined DC operating point for display driver stage 21 whereby unwanted DC related changes in the transfer characteristic of the display driver stage are avoided. The established DC level of the video signal also conserves power consumption by the driver stage, and assures full utilization of the available dynamic range of the driver stage.

Clamping and blanking circuit 14a permits blanking interval conditioning of a wideband video signal using few components, i.e., only two uncomplicated single pole, single throw type electronic switches 16 and 18, with two associated buffer stages 15 and 19. The circuit therefore exhibits reduced parasitic capacitance which results in reduced impairment of the high frequency response of the system. The use of a relatively simple switching arrangement also leads to less disturbance of the clamping voltage stored by capacitor 17 due to parasitic switching transients associated with parasitic capacitances of the switches, or leakage currents of the switches.

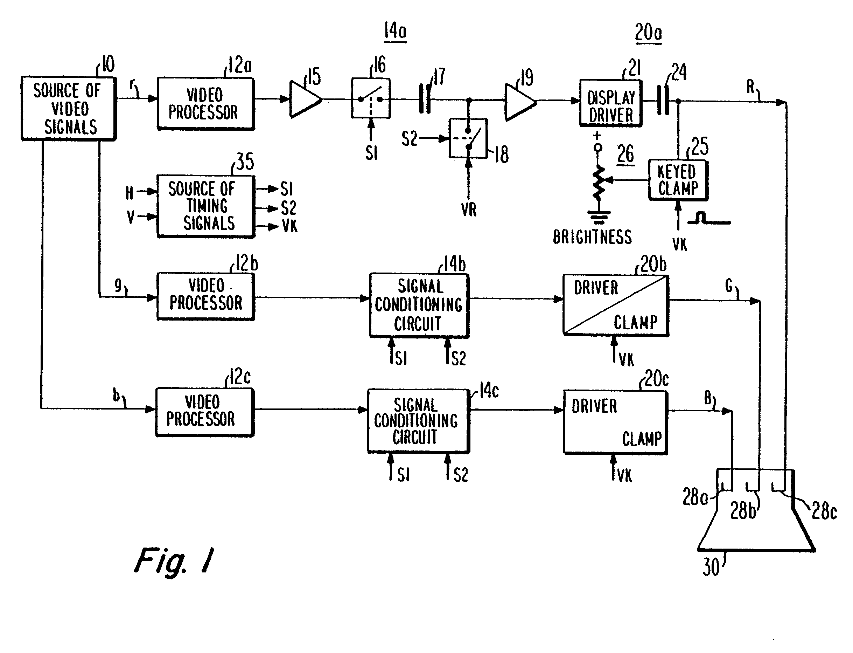

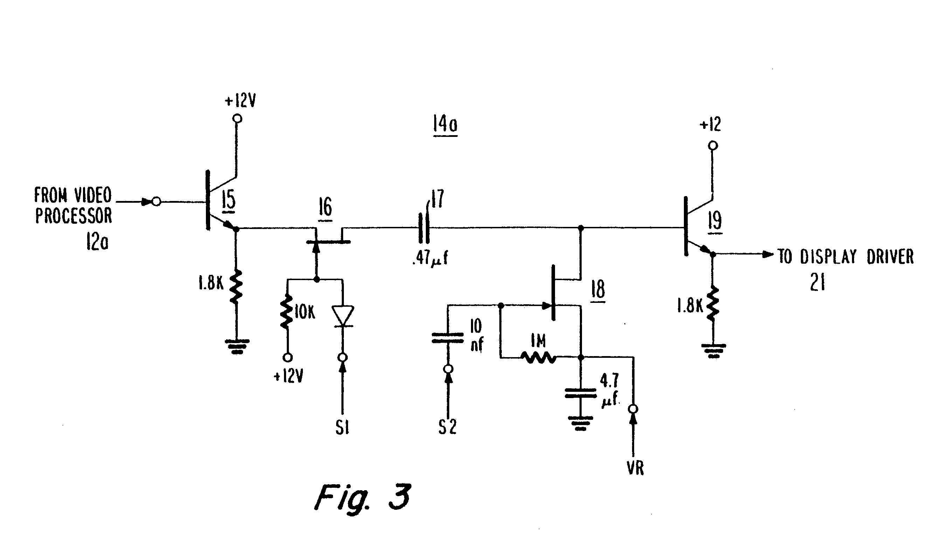

FIGURE 3 shows additional circuit details of circuit 14a of FIGURE 1, wherein corresponding elements are identified by the same reference number. In FIGURE 3, buffer amplifiers 15 and 19 are emitter follower amplifier transistors, and electronic switches 16 and 18 are junction FETs (Field Effect Transistors) with timing signals S1 and S2 applied to gate electrodes of transistors 16 and 18, respectively. Reference voltage VR is applied to a source electrode of transistor 18, a drain electrode of which is coupled to the video signal path. The main current path of transistor 16, as defined by the source and drain electrodes of transistor 16, is coupled in series with the video signal path.

Capacitor 17 can be placed between the emitter of transistor 15 and the source electrode of transistor 16 if an MOS type field effect transistor is use d in place of junction FET 16 since, unlike a juntion FET, an MOS device has substantially no on-state gate-to-source leakage current to disturb the charge on capacitor 17. In the circuit of FIGURE 3, any gate-to-source leakage current of transistor 16 does not disturb the charge on capacitor 17. Also, any parasitic switching transients (i.e., current spikes associated with gate-to-source parasitic capacitances) which may appear at the source electrode of any FET device when the gate is switched do not disturb the charge on capacitor 17.

## Claims

1.  An apparatus for conditioning a video signal including an image interval and a blanking interval to exhibit a reference level during said blanking interval, said apparatus comprising :
    a video signal path having an input and an output;
    a capacitor for coupling a video signal from said input to said output of said video path; said apparatus being characterized by
    first switching means (16) coupled in series with said capacitor (17) in said signal path, said first switching means having a control input for receiving a timing signal (S1) for causing said first switching means to a) exhibit a conductive state during said image interval and during a prescribed reference portion of said blanking interval for enabling said video signal to be conveyed from said input to said output of said video path via said capacitor, and b) exhibit a nonconductive state during remaining portions of said blanking interval; and
    second switching means (18) coupled to said capacitor and to a reference potential (VR), said second switching means having a control input for receiving a timing signal (S2) for causing said second switching means to a) exhibit a conductive state for the duration of said blanking interval whereby said reference potential is coupled to said capacitor, and b) exhibit a nonconductive state at other times.

2.  Apparatus according to Claim 1, characterized in that
    said first (16) and second (18) electronic switches are of the single pole, single throw type.

3.  Apparatus according to Claim 1 or 2, characterized in that
    said first switching means (16) is coupled between said input of said video signal path and an input terminal of said capacitor (17); and
    said second switching means (18) is coupled between an output terminal of said capacitor (17) and said reference potential (VR).

4.  Apparatus according to Claim 1, 2 or 3, characterized in that
    each of said first (16) and second (18) switching means is a field effect transistor with a gate electrode for receiving timing signals and a switched main current conduction path defined by source and drain electrodes.

5.  Apparatus according to any one of the preceding claims, characterized in that
    said image and blanking intervals are horizontal image and blanking intervals, and said prescribed reference portion of said blanking interval is a portion of a back-porch interval within said blanking interval.

6.  Apparatus according to any one of the preceding claims wherein said capacitor is coupled in said video signal path between the output of an input buffer amplifier and the input of an output buffer amplifier.

## Revendications

1.  Un dispositif pour mettre en forme un signal vidéo ayant un intervalle d'image et un intervalle de suppression pour présenter un niveau de référence pendant l'intervalle de suppression, ledit dispositif comprenant :
    un trajet d'un signal vidéo ayant une entrée et une sortie;
    un condensateur pour coupler un signal vidéo de ladite entrée à ladite sortie du trajet vidéo; ledit dispositif étant caractérisé par
    un premier moyen de commutation (16) couplé en série avec le condensateur (17) dans le trajet du signal, ledit premier moyen de commutation ayant une entrée de commande pour recevoir un signal de synchronisation (S1) pour amener ledit premier moyen de commutation à (a) présenter un état conducteur pendant l'intervalle d'image et pendant une portion de référence prescrite de l'intervalle de suppression pour permettre au signal vidéo d'être transmis de ladite entrée à ladite sortie du trajet vidéo via ledit condensateur, et (b) présenter un état non conducteur pendant les portions restantes de l'intervalle de suppression; et

un second moyen de commutation (18) couplé audit condensateur et à un potentiel de référence (VR), ledit second moyen de commutation ayant une entrée de commande pour recevoir un signal de synchronisation (S2) pour amener le second moyen de commutation à (a) présenter un état conducteur pendant la durée de l'intervalle de suppression, de la sorte ledit potentiel de référence est couplé audit condensateur, et (b) présenter un état non conducteur aux autres périodes.

2. Dispositif selon la revendication 1, caractérisé en ce que

les premier (16) et second (18) commutateurs électroniques précités sont du type à contact unique, pôle unique.

3. Dispositif selon la revendication 1, caractérisé en ce que

le premier moyen de commutation (16) précité est couplé entre l'entrée précitée du trajet du signal vidéo et une borne d'entrée du condensateur (17) précité; et

le second moyen de commutation (18) précité est couplé entre une borne de sortie du condensateur (17) et le potentiel de référence (VR) précité;

4. Dispositif selon la revendication 1, 2 ou 3, caractérisé en ce que

chacun des premier (16) et second (18) moyens de commutation précités est un transistor à effet de champ avec une électrode de porte pour recevoir des signaux de synchronisation et un trajet de conduction de courant principal commuté défini par les électrodes de source et de drain.

5. Dispositif selon l'une des revendications précédentes, caractérisé en ce que

les intervalles d'image et de suppression précités sont des intervalles d'image et de suppression horizontale, et la portion de référence prescrite précitée de l'intervalle de suppression est une portion d'un intervalle de palier arrière dans l'intervalle de suppression.

6. Dispositif selon l'une des revendications précédentes, où le condensateur précité est couplé dans le trajet du signal vidéo précité entre la sortie d'un amplificateur tampon d'entrée et l'entrée d'un amplificateur tampon de sortie.

**Patentansprüche**

1. Einrichtung zum Behandeln eines ein Bildintervall und ein Austastintervall enthaltenden Videosignals zum Bilden eines Referenzniveaus während des Austastintervalles, mit

einem Videosignalweg, der einen Eingang und einen Ausgang aufweist und

einem Kondensator zum Koppeln eines Videosignals vom Eingang zum Ausgang des Videosignalweges,

**gekennzeichnet durch**

eine erste Schaltvorrichtung (16), die in Reihe mit dem Kondensator (17) in den Signalweg geschaltet ist und einen Steuereingang aufweist für ein zeitbestimmendes Signal (S1) zum Bewirken, daß die erste Schaltvorrichtung

a) während des Bildintervalles und während eines bestimmten Referenzteiles des Austastintervalles einen leitenden Zustand annimmt, um eine Weiterleitung des Videosignals vom Eingang zum Ausgang des Videosignalweges über den Kondensator zu gestatten, und

b) einen nichtleitenden Zustand während der übrigen Teile des Austastintervalles annimmt; und

eine zweite Schaltvorrichtung (18), die mit dem Kondensator sowie einem Referenzpotential (VR) gekoppelt ist und einen Steuereingang aufweist für ein zeitbestimmendes Signal (S2) zum Bewirken, daß die zweite Schaltvorrichtung (a) einen leitfähigen Zustand für die Dauer des Austastintervalles annimmt, wodurch das Referenzpotential auf den Kondensator gekoppelt wird, und (b) sonst einen nichtleitenden Zustand annimmt.

2. Einrichtung nach Anspruch 1, **dadurch gekennzeichnet,** daß der erste (16) und der zweite (18) elektronische Schalter einpolige Ein-Aus-Schalter sind.

3. Einrichtung nach Anspruch 1 oder 2, **dadurch gekennzeichnet,** daß

die erste Schaltvorrichtung (16) zwischen den Eingang des Videosignalweges und einen Eingangsanschluß des Kondensators (17) gekoppelt ist und

die zweite Schaltvorrichtung (18) zwischen einen Ausgangsanschluß des Kondensators (17) und das Referenzpotential (VR) geschaltet ist.

4. Einrichtung nach Anspruch 1, 2 oder 3, **dadurch gekennzeichnet,** daß die erste (16) und die zweite (18) Schaltvorrichtung jeweils ein Feldeffekttransistor mit einer Gate-Elektrode zum Empfang der zeitbestimmenden Signale und einer durch eine Source- sowie eine Drain-Elektrode begrenzten Hauptstromführungsstrecke sind.

5. Einrichtung nach einem der vorhergehenden Ansprüche, **dadurch gekennzeichnet,** daß die Bild- und Austastintervalle Horizontal-Bild- und Austastintervalle sind und daß der vorgegebene Referenzteil des Austastintervalles ein Teil eines hinteren Schwarzschulterintervalles innerhalb des Austastintervalles ist.

6. Einrichtung nach einem der vorhergehenden Ansprüche, **dadurch gekennzeichnet,** daß der Kondensator im Videosignalweg zwischen den Ausgang eines Eingangs-Pufferverstärkers und den Eingang eines Ausgangs-Pufferverstärkers geschaltet ist.

Fig. I

EP 0 219 263 B1

*Fig. 2*

*Fig. 3*